Europäisches Patentamt

European Patent Office

Office européen des brevets

(11) Numéro de publication : **0 514 252 B1**

(12) **FASCICULE DE BREVET EUROPEEN**

(45) Date de publication du fascicule du brevet :
**17.08.94 Bulletin 94/33**

(51) Int. Cl.⁵ : **G01S 15/66, G01S 11/14**

(21) Numéro de dépôt : **92401287.5**

(22) Date de dépôt : **12.05.92**

(54) **Procédé pour détecter des sources en mouvement et estimer leur trajectoire.**

(30) Priorité : **14.05.91 FR 9105808**

(43) Date de publication de la demande :
**19.11.92 Bulletin 92/47**

(45) Mention de la délivrance du brevet :
**17.08.94 Bulletin 94/33**

(84) Etats contractants désignés :
**DE GB**

(56) Documents cités :
**DE-A- 3 345 021**
**US-A- 4 661 938**
**JOURNAL OF THE ACOUSTICAL SOCIETY OF AMERICA, Vol.76, No.4, Oct. 1984, New York, USA DOMMERMUTH ET AL: "Estimating the trajectory of an accelerationless aircraft by means of a stationary acoustic sensor";**
**pages 1114-1122.**

(56) Documents cités :
**CONFERENCE RECORD OF THE TWENTY-THIRD ASILOMAR CONFERENCE ON SIGNALS, SYSTEMS & COMPUTERS, 30 Oct.-1 Nov. 1989, Pacific Grove, Calif., US. PASSE-RIEUX ET AL: "Track to track association performed on mahalanobis distance in both observable and unobservable situations";**
**pages 405-410.**

(73) Titulaire : **THOMSON-CSF**
**173, Boulevard Haussmann**
**F-75008 Paris (FR)**

(72) Inventeur : **Solal, Marc**
**THOMSON-CSF,**
**SCPI,**
**Cédex 67**
**F-92045 Paris la Défense (FR)**
Inventeur : **Pillon, Denis**
**THOMSON-CSF,**
**SCPI,**
**Cédex 67**
**F-92045 Paris la Défense (FR)**

(74) Mandataire : **Desperrier, Jean-Louis et al**
**THOMSON-CSF**
**SCPI**
**B.P. 329**
**50, rue Jean-Pierre Timbaud**
**F-92402 Courbevoie Cédex (FR)**

## Description

L'invention se rapporte à un procédé pour détecter des sources en mouvement et estimer leur trajectoire à l'aide d'un sonar passif.

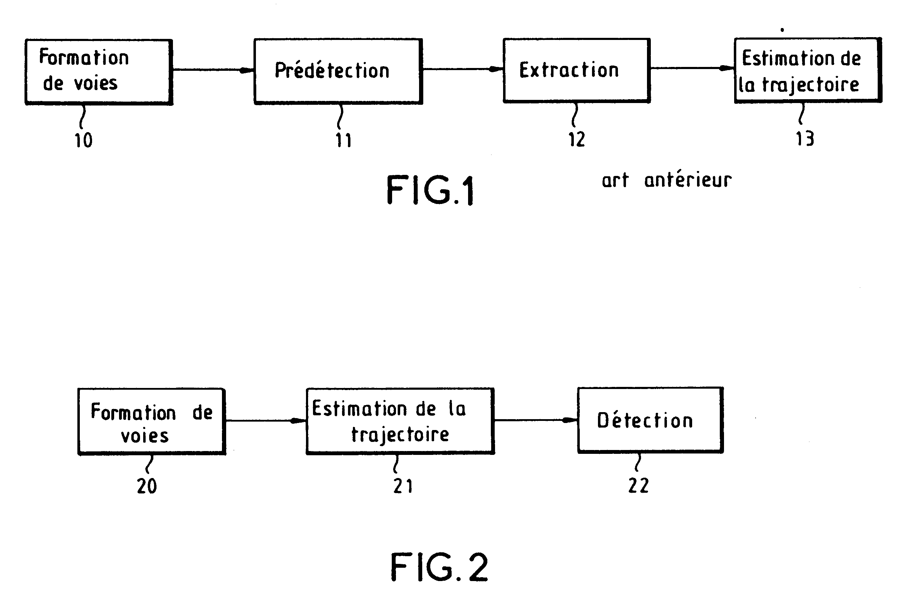

Une méthode classique consiste à traiter les signaux reçus sur les capteurs d'une antenne d'un sonar passif en quatre étapes comme le montre la figure 1.

La première étape, 10, consiste à former des voies en azimut, de manière classique, et à intégrer les signaux sur des temps courts, de l'ordre de quelques secondes, pour pouvoir négliger le mouvement des sources pendant cette durée.

La deuxième étape, 11, consiste en une prédétection des sources, c'est-à-dire qu'à des instants donnés appelés "récurrences", la détection des sources possibles est effectuée par comparaison des signaux de voies à un seuil, et les azimuts de ces sources possibles sont estimés, comme étant la position des maxima des signaux de voie.

La troisième étape, 12, est l'extraction des sources. Cette opération consiste à suivre temporellement la succession des azimuts des sources détectées aux différentes récurrences et à associer ces sources pour former des pistes. Les sources qui ne peuvent pas être associées (dans le cas où elles s'écartent trop des autres) sont rejetées, ce qui permet une réduction du nombre de fausses alarmes.

La quatrième étape 13, consiste à estimer la trajectoire des sources. Cette opération consiste à estimer les paramètres cinématiques, que l'on notera par le vecteur d'état $\underline{X}$, des sources à partir des mesures d'azimut fournies dans l'étape précédente. Pour cela, en général, la source est supposée avoir un mouvement rectiligne uniforme et la dimension du vecteur d'état $\underline{X}$ est 4. Les paramètres cinématiques de la source sont l'abscisse $x(t_o)$ et l'ordonnée $y(t_o)$ de la source à l'instant $t_o$ de la première récurrence considérée ainsi que les vitesses $v_x$ et $v_y$ de la source dans les deux directions x et y. L'estimation du maximum de vraisemblance de $\underline{X}$ qui correspond aux paramètres cinématiques optima, est effectuée par une méthode itérative en supposant que les mesures d'azimut $A_n(t_k)$ de la source n sont bruitées par des bruits gaussiens non corrélés et d'écarts type $\sigma(t_k)$. Le modèle choisi considère que la position du porteur du sonar passif est connue à tout instant et que la source a un mouvement rectiligne uniforme. A une valeur de $\underline{X}$ et à un instant donné $t_k$, correspond donc une valeur d'azimut $A(\underline{X}, t_k)$ donnée par le modèle. L'estimation $\hat{\underline{X}}$ du maximum de vraisemblance de $\underline{X}$ est alors donnée par l'équation suivante :

$$(1) \quad \underline{X} = \text{Arg min} \sum_k \frac{[A_n(t_k) - A(\underline{X}, t_k)]^2}{\sigma^2(t_k)}$$

Cependant, dans cette méthode classique, les performances en détection sont dominées essentiellement par les performances de la prédétection. L'extraction donne un résultat proche d'une intégration, mais il y a toujours une perte d'information due au seuil de prédétection. En sortie d'extraction, il y a généralement des pistes coupées ou comprenant des fausses alarmes. Par ailleurs, il y a aussi des pistes qui ne comportent que des fausses alarmes. Tout ceci conduit à des résultats sur $\hat{\underline{X}}$ biaisés et à grande variance. En outre, les sources à faible rapport signal à bruit (par exemple inférieur à 3dB) ne sont pas détectées

Il existe également des méthodes, dites "poursuite avant détection"', cherchant à estimer la position de la source avant de décider ou non de sa présence. Notamment, dans le domaine de l'imagerie, en utilisant un banc de filtres adaptés aux directions possibles de la source ; ou encore, dans le domaine du sonar passif, en intégrant les signaux de voie sur des droites azimut-temps ou suivant un trajet quelconque. Les temps d'intégration restent relativement courts ( quelques récurrences ). Cependant ces méthodes sont lourdes en calculs notamment pour retrouver la trajectoire des sources.

Pour détecter et estimer la trajectoire de sources en mouvement, l'invention a pour objet un procédé du type "poursuite avant détection", dans lequel les problèmes d'estimation de la trajectoire et de la détection sont considérés de manière globale afin de traiter des signaux à plus faible rapport signal à bruit, de diminuer le nombre de fausses alarmes et d'éliminer la perte d'information due aux non détections.

Selon l'invention, le procédé pour détecter des sources en mouvement et estimer leur trajectoire à l'aide d'un sonar passif disposé sur un porteur, ces sources étant situées dans une direction quelconque d'un milieu environnant le sonar, est caractérisé en ce qu'il consiste :
- à former des voies en azimut et à capter, à des instants de récurrence $t_k$ et sur une durée prédéterminée T, des signaux de voies V provenant de tous les azimuts du milieu environnant le sonar,
- à utiliser un modèle cinématique des sources pour choisir, par approximations successives, des para-

mètres caractéristiques $\underline{X}$ des sources qui maximisent une intégrale des signaux de voies V sur la durée prédéterminée T à laquelle est associée une variation d'azimut et un nombre N de récurrences, pour déterminer les paramètres caractéristiques optima,

- à décider de l'existence des sources par seuillage de l'intégrale des signaux de voies maximisée et correspondant aux paramètres caractéristiques choisis.

D'autres particularités et avantages de l'invention apparaîtront clairement dans la description suivante donnée à titre d'exemple non limitatif et faite en regard des figures annexées qui représentent :

La figure 1 précitée : les étapes de traitement des signaux reçus selon l'art antérieur,

la figure 2 : les étapes du procédé selon l'invention,

la figure 3 : les différentes étapes du calcul du maximum de vraisemblance des paramètres cinématiques des sources dans le cas de plusieurs sources, selon l'invention,

La figure 4 : la variation du critère de détection de source dans le cas d'une manoeuvre de la source, selon l'invention,

la figure 5 : une illustration de l'ambiguïté sur différentes trajectoires possibles d'une source dans le cas où le porteur a une trajectoire rectiligne uniforme.

La figure 2 représente des étapes du procédé, selon l'invention.

Ce procédé comporte trois étapes de traitement des signaux reçus sur les capteurs d'une antenne d'un sonar passif disposé sur un porteur pouvant être par exemple un bateau de surface ou un sous-marin.

La première étape, 20, dite "formation de voies", consiste à former des voies en azimut et à capter, à des instants de récurrence $t_k$ et sur une longue durée T d'observation, par exemple plusieurs minutes à plusieurs dizaines de minutes et pour un nombre de récurrences de l'ordre dune ou plusieurs centaines, des signaux $V(A,t_k)$ provenant de tous les azimuts du milieu environnant le sonar.

La deuxième étape, 21, consiste à estimer les trajectoires des sources possibles. Pour cela, un modèle cinématique des sources est utilisé pour choisir, par approximations successives, parmi tous les paramètres cinématiques $\underline{X}$ possibles, ceux qui maximisent une intégrale des signaux de voies sur une durée prédéterminée à laquelle est associée une variation d'azimut et un nombre N de récurrences. L'estimation du maximum de vraisemblance des paramètres cinématiques d'une source dans le cas théorique où cette source est unique, consiste donc à calculer :

$$(2) \quad \hat{\underline{X}} = \text{Arg max}[\ \sum_{k}\ V(A(\underline{X},t_k),t_k)]$$

Le modèle cinématique choisi suppose que la source est en mouvement rectiligne uniforme et que la position du porteur est connue à tout instant.

Dans ces conditions, à une valeur des paramètres cinématiques $\underline{X}$ et à un instant $t_k$ de récurrence donnée, correspond un azimut $A(\underline{X}, t_k)$ déterminé par le modèle cinématique. Pour cet azimut et à l'instant $t_k$, correspond un signal de voie $V(A(\underline{X},t_k), t_k)$ obtenu dans la première étape, 20.

Le modèle cinématique donne la position de la source à tous les instants $t_k$ de récurrence ainsi que tous les azimuts correspondant à ces positions, tandis que la première étape, 20, donne tous les signaux de voies correspondant à tous les azimuts. Il ne reste plus qu'à faire l'intégrale des signaux de voies sur la durée T d'observation et de rechercher, par une méthode itérative de type Gauss-Newton par exemple, les valeurs des paramètres cinématiques qui maximisent la valeur de cette intégrale. Un moyen d'initialiser la méthode itérative est par exemple, de chercher le maximum de l'intégrale des signaux de voies sur un maillage grossier en $\underline{X}$.

La troisième étape, 2 2, est une étape de détection. Elle consiste à comparer la valeur maximale de l'intégrale des signaux de voies précédemment obtenue dans la deuxième étape, à un seuil de détection S correspondant à une probabilité de fausse alarme. L'équation du critère de détection est le suivant :

$$(3) \quad Y(\hat{\underline{X}}) = \sum_{k}\ V(A(\hat{\underline{X}},t_k),\ t_k) \quad \gtrless S$$

Si la valeur maximale de l'intégrale est supérieure au seuil de détection S, on considère que la source correspondante existe. Dans le cas contraire, on considère que c'est une fausse alarme ; Ce procédé permet d'améliorer le rapport signal à bruit d'un rapport $\sqrt{N}$ si N est le nombre de récurrences, car l'intégration des signaux de voies est effectuée sur N récurrences supposées indépendantes. La portée de détection est donc améliorée d'un facteur $N^{1/4}$ dans le cas où la propagation des ondes acoustiques provenant des sources est de type sphérique. De plus, il n'y a plus de perte d'informations due aux non détections et les fausses alarmes sont réduites.

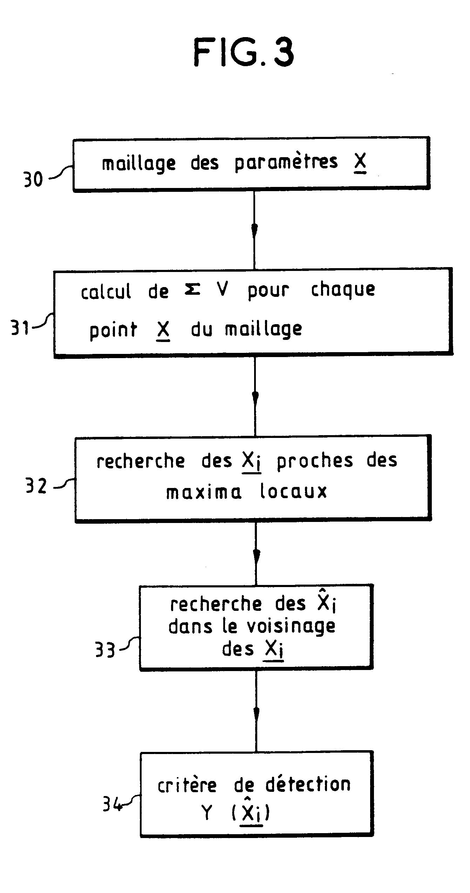

La figure 3 représente les différentes étapes du calcul des paramètres caractéristiques optima dans le cas de plusieurs sources.

Généralement, il y a plusieurs sources et il faut rechercher les maxima locaux. Pour détecter toutes les sources existantes, le procédé consiste alors à effectuer, dans une étape 30, un maillage des paramètres cinématiques $\underline{X}$ dans toutes les directions du milieu observé, le maillage étant effectué avec un pas déterminé dépendant de la résolution de l'antenne du sonar ; à calculer, dans une étape 31, pour chaque point du maillage la valeur de l'intégrale des signaux de voies sur une durée déterminée T ; à sélectionner dans une étape 32, des paramètres $\underline{X_j}$ du maillage pour lesquels la valeur de l'intégrale des signaux de voies est la plus grande vis-à-vis des valeurs obtenues pour les paramètres $\underline{X}$ voisins dans le maillage ; les paramètres $\underline{X_j}$ sélectionnés sont proches des maxima locaux ; dans une étape 33, à estimer de manière précise les maxima locaux en recherchant, dans le voisinage de ces paramètres $\underline{X_j}$, des paramètres cinématiques $\underline{\hat{X}_j}$ qui maximisent l'intégrale des signaux de voies ; ceci est effectué par une méthode itérative d'optimisation par exemple du type Gauss-Newton en initialisant cette méthode sur les paramètres $\underline{X_j}$ sélectionnés ; à appliquer dans une étape 34, le critère de détection $Y(\underline{\hat{X}_j})$ en seuillant la valeur maximale de l'intégrale des signaux de voies pour estimer si la source est présente ou si c'est une fausse alarme. A ne garder que les paramètres $\underline{\hat{X}i}$ pour lesquels l'intégrale des signaux de voies est supérieure au seuil de détection.

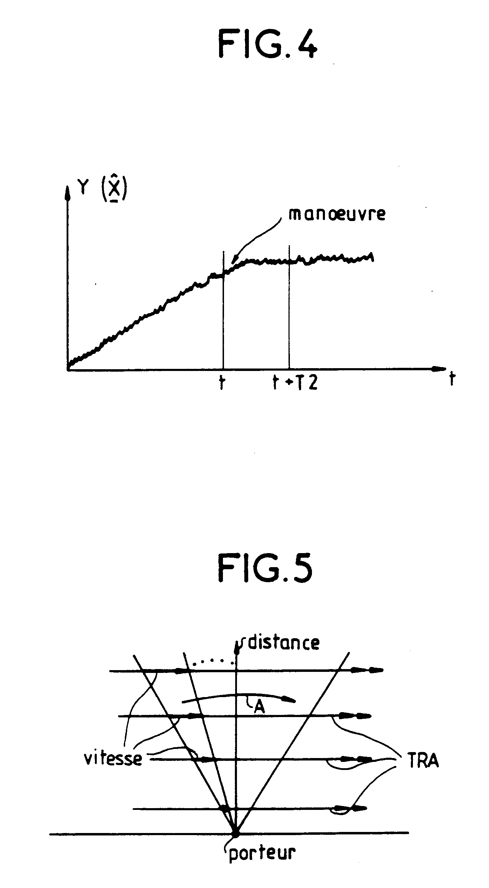

La figure 4 représente la variation du critère de détection de source dans le cas d'une manoeuvre de la source. Pour détecter des sources qui apparaissent en cours de traitement et détecter des manoeuvres ou des disparitions de source, le critère de détection est calculé à des instants t espacés d'une durée T2 plus petite que la durée totale T d'observation.

Comme illustré sur la figure 4, pour une source donnée à évolution constante, le critère de détection $Y(\underline{\hat{X}})$ varie presque linéairement en fonction du temps. Lorsque la source a manoeuvré, on observe un changement de pente dans la variation du critère de détection $Y(\underline{\hat{X}})$.

Le calcul de $Y_t[\underline{\hat{X}}(t)]$ et de $Y_{t+T2}[\underline{\hat{X}}(t)]$ permet de comparer les pentes et de trouver la cassure c'est-à-dire l'instant où la source a manoeuvré. Le test de manoeuvre peut être par exemple le suivant :

$$(4) \qquad (Y_{t + T2} - Y_t)/T2 < Y_t/t \; + \; S2$$

en supposant que l'intégration a commencé à t = 0, et S2 est un seuil sur la variation de pente.

La figure 5 est une illustration de l'ambiguïté sur différentes trajectoires possibles d'une source dans le cas où le porteur du sonar passif a une trajectoire rectiligne uniforme.

La trajectoire du porteur du sonar passif peut souvent être décomposée en "jambes" séparées par des manoeuvres. Une jambe est définie comme étant une période de temps pendant laquelle le porteur du sonar a une trajectoire rectiligne uniforme. Pendant la durée d'une jambe, la trajectoire de la source n'est pas observable puisque seulement 3 paramètres peuvent la définir au lieu de 4. En effet, la variation d'azimut A observée pendant le temps d'intégration des signaux de voies conduit à une infinité de trajectoires TRA possibles qui sont homothétiques. Il y a alors ambiguïté distance-vitesse. Dans ces conditions, la trajectoire de la source est estimée partiellement en fixant l'un des quatre paramètres du vecteur d'état $\underline{X}$ à une valeur arbitraire et en estimant les trois autres. Si la solution est cherchée pour une valeur différente de celle qui a été fixée, il suffit de faire une homothétie dans le repère relatif au porteur du sonar, comme c'est illustré par la figure 4.

Pour chaque jambe, il est donc possible d'estimer trois paramètres du vecteur d'état $\underline{X}$ pour une valeur arbitraire du quatrième paramètre.

Pour ce faire, le procédé d'estimation des paramètres cinématiques de la source décrit précédemment est utilisé pour chaque jambe en ramenant la dimension à trois paramètres au lieu de quatre. Le temps de calcul nécessaire pour effectuer le maillage des paramètres cinématiques de la source est alors considérablement réduit. Lorsque les estimations des trois paramétres ont été effectuées sur chaque jambe, il est ensuite possible d'en déduire une estimation complète des quatre paramètres cinématiques de la source (x($t_o$) ; y($t_o$) ; $v_x$ ; $v_y$), en utilisant une méthode connue permettant d'associer les estimations effectuées sur différentes jambes et qui correspondent à une même source, et de recombiner des estimations pour les différentes jambes pour obtenir une estimation complète des quatre paramètres cinématiques de la source. A titre d'exemple, une méthode connue qui peut être utilisée pour obtenir une estimation complète des quatre paramètres de la source est décrite dans un article de JM PASSERIEUX, D. PILLON, P. VERVEUR intitulé "Track to track association performed on Mahalanobis distance in both observable and unobservable situations" et publié dans les Proceedings 1989 ASILOMAR Conférence on Signals, Systems and Computers.

Chaque source émettant des signaux acoustiques à une fréquence particulière, dans le cas où l'on souhaite réaliser une détection à bande étroite et rechercher la fréquence $f_o$ émise par la source, les voies sont formées en azimut et en fréquence, les signaux de voies sont utilisés pour un azimut particulier et une fréquence particulière, et le vecteur d'état $\underline{X}$ comporte un paramètre supplémentaire qui est la fréquence $f_o$ émise

4

par la source.

Les paramètres de la source à déterminer sont alors l'abscisse $x(t_o)$, l'ordonnée $y(t_o)$, les vitesses $v_x$ et $v_y$ selon les directions x et y, et la fréquence $f_o$. Les signaux de voies V sont fonction de l'azimut, de la fréquence et du temps : V(A, f, t). Dans ces conditions, le modèle utilisé pour choisir les paramètres optimaux de la source permet de déterminer la variation de l'azimut de la source ainsi que la variation, vue par le porteur du sonar, de la fréquence de la source. Cette variation de la fréquence est due à l'effet Doppler et dépend des paramètres cinématiques de la source et du porteur. Le procédé d'estimation des paramètres de la source et de détection des sources est alors appliqué de la même manière que précédemment en effectuant un maillage portant sur cinq paramètres au lieu de quatre. L'optimisation des paramètres $\underline{X}$ par approximations successives comporte le modèle représentatif de la variation de fréquence due à l'effet Doppler. L'équation permettant d'obtenir le maximum de vraisemblance d'une source est alors la suivante :

$$\hat{\underline{X}} = \text{Arg max}[\ \sum_{k}\ V(A(\underline{X},t_k),f(\underline{X},t_k),t_k)\ ]$$

La détection est ensuite effectuée par seuillage de cette intégrale des signaux de voies. L'utilisation de l'information donnée par la fréquence permet de pouvoir observer la source même en l'absence de manoeuvre.

## Revendications

1. Procédé pour détecter des sources en mouvement et estimer leur trajectoire à l'aide d'un sonar passif disposé sur un porteur, ces sources étant situées dans une direction quelconque d'un milieu environnant le sonar, caractérisé en ce qu'il consiste :
   - à former des voies en azimut et à capter, à des instants de récurrence $t_k$ et sur une durée prédéterminée T, des signaux de voies V provenant de tous les azimuts du milieu environnant le sonar,
   - à utiliser un modèle cinématique des sources pour choisir, par approximations successives, des paramètres caractéristiques, notés par un vecteur d'état $\underline{X}$, des sources qui maximisent une intégrale des signaux de voies V sur la durée prédéterminée T à laquelle est associée une variation d'azimut et un nombre N de récurrences, pour déterminer les paramètres caractéristiques optima,
   - à décider de l'existence des sources par seuillage de l'intégrale des signaux de voies maximisée et correspondant aux paramètres caractéristiques choisis.

2. Procédé selon la revendication 1, caractérisé en ce que les paramètres caractéristiques de la source sont des paramètres cinématiques de la source.

3. Procédé selon la revendication 2, caractérisé en ce que, une source émettant des signaux acoustiques à une fréquence particulière, pour détecter la fréquence émise par la source, les voies sont formées en azimut et en fréquence, le modèle cinématique d'une source est complété par un modèle représentatif d'une variation, due à un effet Doppler, de la fréquence de la source vue par le porteur, les paramètres caractéristiques de la source sont les paramètres cinématiques de la source complétés par la fréquence émise par la source.

4. Procédé selon la revendication 3, caractérisé en ce que le calcul des paramètres caractéristiques optima des sources consiste :
   - à effectuer un maillage, suivant un pas déterminé, des paramètres caractéristiques $\underline{X}$ ;
   - à calculer pour chaque paramètre $\underline{X}$ du maillage, la valeur de l'intégrale des signaux de voies sur une durée déterminée T ;
   - à sélectionner des paramètres $\underline{X}_i$ du maillage proches des maxima locaux ;
   - à initialiser une méthode itérative sur les paramètres $\underline{X}i$ sélectionnés, pour estimer de manière précise les maxima locaux de l'intégrale des signaux de voies ;
   - à ne garder que des paramètres $\hat{\underline{X}}i$ pour lesquels l'intégrale des signaux des voies est supérieure à un seuil de détection prédéterminé.

5. Procédé selon la revendication 4, caractérisé en ce que les paramètres cinématiques des sources sont de dimension quatre pour déterminer, sans ambiguité, la trajectoire des sources.

6. Procédé selon la revendication 5, caractérisé en ce que dans le cas où le mouvement du porteur du sonar se décompose en plusieurs trajectoires rectilignes uniformes, appelées jambes, la trajectoire d'une source est estimée partiellement en fixant l'un des quatre paramètres cinématiques de la source à une valeur arbitraire, en estimant les trois autres paramètres cinématiques de la source pour chaque jambe et en associant les estimations effectuées sur différentes jambes pour en déduire une estimation complète des quatre paramètres cinématiques de la source.

**Patentansprüche**

1. Verfahren zum Erfassen von in Bewegung befindlichen Quellen und zum Schätzen ihrer Bahn mit Hilfe eines passiven Sonargeräts, das auf einem Träger angeordnet ist, wobei sich diese Quellen in einer beliebigen Richtung eines das Sonargerät umgebenden Mediums befinden, dadurch gekennzeichnet, daß es darin besteht, daß:
   - Kanäle als Funktion des Azimuts gebildet werden und in sich wiederholenden Zeitpunkten $t_k$ und während einer vorgegebenen Dauer T Kanalsignale V aufgenommen werden, die aus sämtlichen Azimutrichtungen des das Sonargerät umgebenden Mediums kommen,
   - ein kinematisches Modell der Quellen verwendet wird, um durch sukzessive Approximationen diejenigen durch einen Zustandsvektor $\underline{X}$ angegebenen charakteristischen Parameter der Quellen zu wählen, die ein Integral der Kanalsignale V über die vorgegebene Dauer T maximieren, welcher eine Azimutveränderung und eine Anzahl N von Wiederholungsperioden zugehören, um die optimalen charakteristischen Parameter zu bestimmen,
   - das Vorhandensein von Quellen dadurch festgestellt wird, daß das maximierte Integral der Kanalsignale, das den gewählten charakteristischen Parametern entspricht, mit einem Schwellenwert verglichen wird.

2. Verfahren gemäß Anspruch 1, dadurch gekennzeichnet, daß die charakteristischen Parameter der Quelle kinematische Parameter der Quelle sind.

3. Verfahren gemäß Anspruch 2, dadurch gekennzeichnet, daß dann, wenn eine Quelle Schallsignale mit einer besonderen Frequenz aussendet, für die Erfassung der von der Quelle ausgesandten Frequenz die Kanäle als Funktion des Azimuts und der Frequenz gebildet werden, das kinematische Modell einer Quelle durch ein Modell vervollständigt wird, das eine Änderung der vom Träger gesehenen Frequenz der Quelle aufgrund eines Doppler-Effekts repräsentiert, und die charakteristischen Parameter der Quelle kinematische Parameter der Quelle sind, die durch die von der Quelle ausgesandte Frequenz vervollständigt sind.

4. Verfahren gemäß Anspruch 3, dadurch gekennzeichnet, daß die Berechnung der optimalen charakteristischen Parameter der Quellen darin besteht, daß:
   - ein Netz mit bestimmter Maschenweite der charakteristischen Parameter $\underline{X}$ erzeugt wird;
   - für jeden Parameter $\underline{X}$ des Netzes der Wert des Integrals der Kanalsignale über eine bestimmte Dauer T berechnet wird;
   - Parameter $\underline{X}_i$ des Netzes, die sich in der Nähe der lokalen Maxima befinden, ausgewählt werden;
   - ein iteratives Verfahren für die ausgewählten Parameter $\underline{X}_i$ begonnen wird, um präzise die lokalen Maxima des Integrals der Kanalsignale zu schätzen;
   - nur die Parameter $\hat{X}_i$ beibehalten werden, für die das Integral der Kanalsignale größer als ein vorgegebener Erfassungsschwellenwert ist.

5. Verfahren gemäß Anspruch 4, dadurch gekennzeichnet, daß die kinematischen Parameter der Quellen vierdimensional sind, um die Bahn der Quellen eindeutig zu bestimmen.

6. Verfahren gemäß Anspruch 5, dadurch gekennzeichnet, daß in dem Fall, in dem die Bewegung des Trägers des Sonargeräts in mehrere gleiche, geradlinige Bahnen, die Schenkel genannt werden, zerfällt, die Bahn einer Quelle teilweise dadurch geschätzt wird, daß einer der vier kinematischen Parameter der Quelle auf einen beliebigen Wert gesetzt wird, die drei anderen kinematischen Parameter der Quelle für jeden Schenkel geschätzt werden und die in verschiedenen Schenkeln ausgeführten Schätzungen vereinigt werden, um daraus eine vollständige Schätzung der vier kinematischen Parameter der Quelle abzuleiten.

**Claims**

1. Method for detecting sources in motion and estimating their path with the aid of a passive sonar placed on a carrier, these sources being situated in any direction of a medium surrounding the sonar, characterized in that it consists:
   - in forming azimuthal channels and in capturing, at repetition instants $t_k$ and over a predetermined duration T, channel signals V originating from all azimuths of the medium surrounding the sonar,
   - in using a kinematic model of the sources to choose, through successive approximations, characteristic parameters, denoted by a state vector $\underline{X}$, of the sources which maximize an integral of the channel signals V over the predetermined duration T with which is associated an azimuth variation and a number N of repetitions, in order to determine the optimal characteristic parameters,
   - in deciding the existence of the sources by thresholding the maximized integral of the channel signals corresponding to the chosen characteristic parameters.

2. Method according to Claim 1, characterized in that the characteristic parameters of the source are kinematic parameters of the source.

3. Method according to Claim 2, characterized in that, a source emitting acoustic signals at a particular frequency, in order to detect the frequency emitted by the source, the channels are formed by azimuth and by frequency, the kinematic model of a source is supplemented with a model representative of a variation, due to a Doppler effect, in the frequency of the source seen by the carrier, the characteristic parameters of the source are the kinematic parameters of the source supplemented with the frequency emitted by the source.

4. Method according to Claim 3, characterized in that the computation of the optimal characteristic parameters of the sources consists:
   - in making a grid, with a specified spacing, of the characteristic parameters $\underline{X}$;
   - in computing for each parameter $\underline{X}$ of the grid, the value of the integral of the channel signals over a specified duration T;
   - in selecting parameters $\underline{X}_l$ of the grid which are close to the local maxima;
   - in initializing an iterative procedure on the selected parameters $\underline{X}i$, in order to estimate accurately the local maxima of the integral of the channel signals;
   - in retaining only parameters $\hat{\underline{X}}i$ for which the integral of the channel signals is greater than a predetermined detection threshold.

5. Method according to Claim 4, characterized in that the kinematic parameters of the sources are of dimension four in order to determine, unambiguously, the path of the sources.

6. Method according to Claim 5, characterized in that in the case where the motion of the carrier of the sonar is broken down into several uniform straight paths, called legs, the path of a source is estimated partially by fixing one of the four kinematic parameters of the source at an arbitrary value, by estimating the other three kinematic parameters of the source for each leg and by associating the estimates made over various legs in order to deduce therefrom a complete estimate of the four kinematic parameters of the source.

7

| Formation de voies | → | Prédétection | → | Extraction | → | Estimation de la trajectoire |
|---|---|---|---|---|---|---|

10      11      12      13

## FIG.1

art antérieur

| Formation de voies | → | Estimation de la trajectoire | → | Détection |
|---|---|---|---|---|

20      21      22

## FIG.2

# FIG. 3

30 — | maillage des paramètres $\underline{X}$ |

31 — | calcul de $\Sigma$ V pour chaque point $\underline{X}$ du maillage |

32 — | recherche des $\underline{X}_i$ proches des maxima locaux |

33 — | recherche des $\hat{\underline{X}}_i$ dans le voisinage des $\underline{X}_i$ |

34 — | critère de détection Y $(\hat{\underline{X}}_i)$ |

# FIG.4

# FIG.5